# EUROPEAN PATENT APPLICATION

(11) **EP 3 435 634 A1**
(43) Date of publication of application: **30.01.2019**
(21) Application number: 16895133.3
(22) Date of filing: 12.07.2016
(51) Int. Cl.: H04M 1/02

(54) **MOBILE COMMUNICATION TERMINAL**

(30) Priority: 25.03.2016 CN 201610176141
(71) Applicant: YINLONG ENERGY CO., LTD., Sanzao Town Zhuhai City Guangdong 519040 (CN)
(72) Inventor: WEI, Yincang, Zhuhai Guangdong 519040 (CN)
(74) Representative: Berggren Oy, Tampere
(86) International application number: PCT/CN2016/089804
(87) International publication number: WO 2017/161783

(57) **Abstract**

The present invention provides a mobile communication terminal, comprising a mobile communication terminal body, a main processor, and a rechargeable battery for providing power. The mobile communication terminal body comprises an edgeless touch screen and is connected to the main processor. The main processor is used for controlling display and trigger operations of the mobile communication terminal body. Both the mobile communication terminal body and the main processor are connected to the rechargeable battery. The rechargeable battery is a lithium-titanium composite graphene battery. According to the mobile communication terminal of the present invention, the charging time of the mobile communication terminal is shortened; in addition, the problem that the mobile communication terminal cannot be used for long under the high-temperature or severe cold condition is solved, so that the mobile communication terminal can be applied to special occasions such as armies, and the environmental adaptability, generality and durability of the mobile communication terminal are improved.

## Description

### Cross-Reference to Related Applications

This application claims priority to Chinese Patent Application No. 201610176141.8, filed on March 25, 2016, entitled "Mobile Communication Terminal", which is incorporated herein by reference in its entirety.

### Technical Field

The present disclosure relates to the technical field of smart electronic devices, and in particular to a mobile communication terminal.

### Background Art

At present, a smart mobile communication terminal is integrated with multiple functions such as communication, financial management and entertainment like a miniature personal computer, and the multifunctionality increases the demand for a large screen. Whether for sending and receiving mails or for watching news information, a high-definition large screen for mobile communication terminal has basically become the mainstream for modern mobile communication terminals. The mobile communication terminals are used more and more widely. Everyone has two or three mobile communication terminals, which are for public use, for private use, for home use, or for other uses. This results in several mobile communication terminals being carried by a person every day, which is neither convenient nor safe. Moreover, the battery of the current mobile communication terminal cannot be used in a severe cold or high-temperature area. For example, an ordinary mobile communication terminal cannot work in an environment at minus 40 °C or minus 50 °C, and cannot work in an environment at a high temperature of 55 °C, 60 °C or the like for a long time, thereby resulting in poor versatility and durability of the mobile communication terminal.

### Summary

In view of the current state of the prior art, an object of the present disclosure is to provide a mobile communication terminal to improve the versatility and durability of the mobile communication terminal.

To achieve the above-mentioned object, the present disclosure employs the following technical solutions:
A mobile communication terminal, comprising:
   a mobile communication terminal body which comprises a edgeless touch screen;
   a main processor, to which the mobile communication terminal body is connected and the main processor is configured to control display and trigger operations of the mobile communication terminal body; and
   a rechargeable battery configured to provide power source, to which both the mobile communication terminal body and the main processor are connected and which is a lithium-titanium composite graphene battery.

In one embodiment, the mobile communication terminal body comprises a first mobile communication terminal body and a second mobile communication terminal body, wherein the second mobile communication terminal body is placed on a back side of the first mobile communication terminal body; and
the main processor and the rechargeable battery are placed between the first mobile communication terminal body and the second mobile communication terminal body, and both the first mobile communication terminal body and the second mobile communication terminal body are connected to the main processor and the rechargeable battery.

In one embodiment, the first mobile communication terminal body comprises a first touch screen, a first circuit board, and a first cover (plate); and the second mobile communication terminal body further comprises a second touch screen, a second circuit board, and a second cover (plate);
the first touch screen, the first circuit board, and the main processor are sequentially connected, wherein the first touch screen is configured to receive a first touch signal and transmit the first touch signal to the main processor via the first circuit board;
the second touch screen, the second circuit board, and the main processor are sequentially connected, wherein the second touch screen is configured to receive a second touch signal and transmit the second touch signal to the main processor through the second circuit board; and
the main processor is configured to control, based on a first touch signal, the first mobile communication terminal body to implement a corresponding trigger operation, and control, based on a second touch signal, the second mobile communication terminal body to implement a corresponding trigger operation; or the main processor is configured to control, based on the first touch signal or the second touch signal, the first mobile communication terminal body and the second mobile communication terminal body to synchronously implement a corresponding trigger operation.

In one embodiment, the first cover is provided thereon with a first button, wherein the first button is connected to the first circuit board; and
the second cover is provided thereon with a second button, wherein the second button is connected to the second circuit board.

In one embodiment, the mobile communication terminal further comprises a rotatable connection portion connected between the first mobile communication terminal body and the second mobile communication terminal body; and
the first mobile communication terminal body is rotated relative to the second mobile communication terminal body by an angle of greater than or equal to 180 degrees by the rotatable connection portion, or the second mobile communication terminal body is rotated relative to the first mobile communication terminal body by an angle of greater than or equal to 180 degrees by the rotatable connection portion.

In one embodiment, when the first mobile communication terminal body is rotated relative to the second mobile communication terminal body by an angle of 180 degrees or the second mobile communication terminal body is rotated relative to the first mobile communication terminal body by an angle of 180 degrees, the first touch screen and the second touch screen are placed on a same plane, the first touch screen and the second touch screen are combined integrally, and the main processor controls the first mobile communication terminal body and the second mobile communication terminal body to run synchronously based on the first touch signal or the second touch signal.

In one embodiment, the rotatable connection portion has a hinge structure or a rotating shaft structure, and connecting wires connecting the first mobile communication terminal and the second mobile communication terminal are disposed in the rotatable connection portion.

In one embodiment, the network type of the first mobile communication terminal body includes 2G, 3G, or 4G, and the network type of the second mobile communication terminal body includes 2G, 3G, or 4G.

In one embodiment, the first mobile communication terminal body is a mobile communication terminal body of dual-card dual-standby type, and the second mobile communication terminal body is also a mobile communication terminal body of dual-card dual-standby type.

In one embodiment, each of the first mobile communication terminal body and the second mobile communication terminal body is a mobile phone body or an iPad body.

The present disclosure has the following beneficial effects:
In the mobile communication terminal of the present disclosure, since the lithium-titanium composite graphene battery has the characteristics such as large battery capacity, large discharge rate, and fast charging, by using the lithium-titanium composite graphene battery as a rechargeable battery configured to supply power to the mobile communication terminal body, the charging time of the mobile communication terminal is shortened and meanwhile the problem that the mobile communication terminal cannot be used for a long time under the high-temperature or severe cold condition is solved so that the mobile communication terminal can be applied to special occasions such as armies, and the environmental adaptability, versatility and durability of the mobile communication terminal are improved. Moreover, dual-screen display by the mobile communication terminal is achieved by the first mobile communication terminal body and the second mobile communication terminal body disposed opposite to each other, thus the number of mobile communication terminals carried by the user can be reduced, and its use is facilitated.

### Brief Description of Drawings

FIG. 1 is a schematic overall diagram of an embodiment of a mobile communication terminal of the present disclosure;
FIG. 2 is a side view of the mobile communication terminal of FIG. 1;

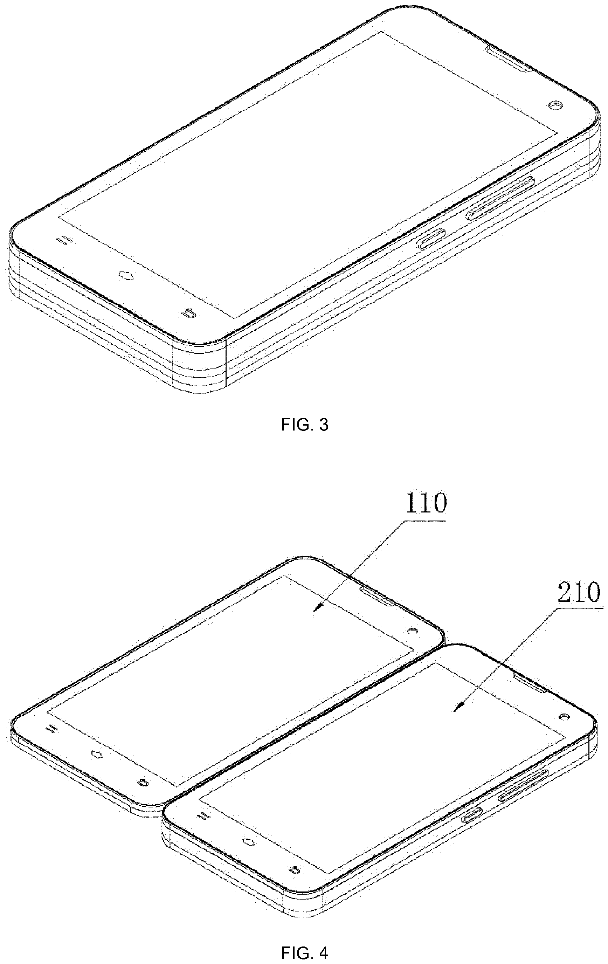

FIG. 3 is a schematic structural diagram of an embodiment of a mobile communication terminal of the present disclosure in a closed state; and
FIG. 4 is a schematic structural diagram of an embodiment of a mobile communication terminal of the present disclosure in an open state.

### Detailed Description of Embodiments

In order to make the technical solutions of the present disclosure clearer, the mobile communication terminal of the present disclosure will be described in further detail below with reference to the accompanying drawings. It should be understood that specific embodiments described herein are merely illustrative of the present disclosure and are not intended to limit the present disclosure. It should be noted that the embodiments in the present disclosure and the features in the embodiments may be combined with each other without conflict.

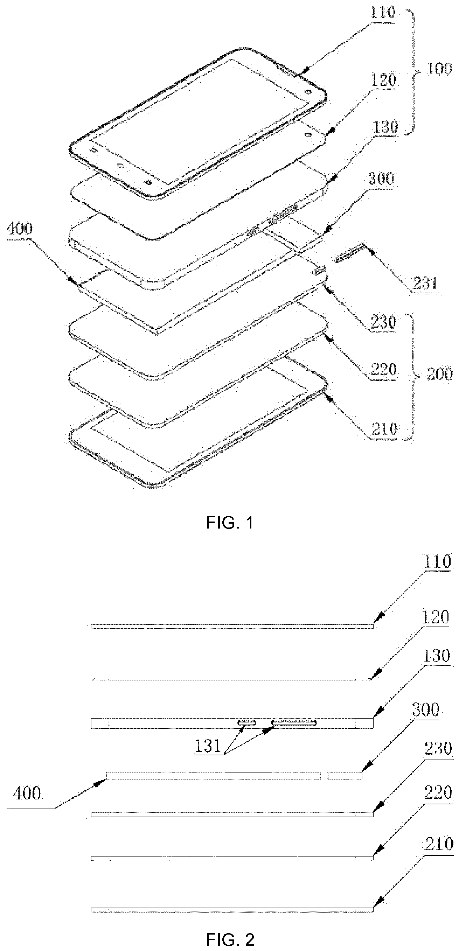

As shown in FIG. 1, an embodiment of the present disclosure provides a mobile communication terminal, comprising a mobile communication terminal body, a main processor 300, and a rechargeable battery 400 configured to provide power source, wherein the mobile communication terminal body comprises a edgeless touch screen, whereby the visual area of the mobile communication terminal body is increased. The mobile communication terminal body is connected to the main processor 300. Specifically, the edgeless touch screen is connected to the main processor 300, and the main processor 300 is configured to control, based on a touch signal received by the touch screen, the display and trigger operations of the mobile communication terminal body. Both the mobile communication terminal body and the main processor 300 are connected to the rechargeable battery 400. The rechargeable battery 400 is configured to supply power for the entire mobile communication terminal. In the present embodiment, preferably the rechargeable battery 400 is a lithium-titanium composite graphene battery.

Since the lithium-titanium composite graphene battery has a negative electrode made of a lithium titanate material and has the characteristic that it has a great number of cycles and can be used in an environment at -45 °C to 60 °C, the lithium-titanium composite graphene battery has the characteristics such as large battery capacity, large discharge rate, and fast charging. The charging time of the mobile communication terminal is shortened by using the lithium-titanium composite graphene battery as a rechargeable battery to supply power for the mobile communication terminal, and it is experimentally testified that the mobile communication terminal can be fully charged within 6 minutes. In addition, the problem that the mobile communication terminal cannot be used for a long time under the high-temperature or severe cold condition is solved by using the lithium-titanium composite graphene battery, so that the mobile communication terminal can be used for a long time in an environment at -50 °C to 60 °C and can have a service life of up to 10 years, thereby improving the environmental adaptability, versatility, and durability of the mobile communication terminal. Therefore, the mobile communication terminal in the present embodiment is applicable to special applications (expedition teams, etc.) and armies.

In the present embodiment, the lithium-titanium composite graphene battery may be used as a self-made modified lithium-titanium composite graphene battery. Of course, in other embodiments, other graphene batteries purchased externally may also be used as the lithium-titanium composite graphene battery. A process of preparing a negative electrode of the self-made modified lithium-titanium composite graphene battery is described below, which specifically comprises the following steps:
1. mixing graphene with N-methylpyrrolidone and a dispersant in a mass ratio, wherein the graphene and NMP are mixed in a ratio of 1:99 to 10:90;
2. stirring raw materials, introduced in accordance with the first step, by using a double planetary mixer for 30 to 60 minutes;
3. introducing a graphene slurry into a grinder after the mixing in the second step is completed, and dispersing and grinding the graphene slurry by means of zirconia;
4. introducing the graphene slurry into a double planetary mixer after the grinding of the graphene slurry is completed, and introducing a lithium titanate material and mixing and stirring the same;
5. introducing the mixed material into a spray drier for spray drying at a high temperature of 300 °C to 400 °C after the stirring is completed;
6. introducing the material into a high-temperature kiln for calcination at a high temperature of 800 to 1500 °C after the spray drying is completed;
7. cooling the material for subsequent use after it is calcined;
8. introducing, dispersing and stirring a solvent and a binder, wherein the solvent is generally selected from NMP (N-methylpyrrolidone) or water, the binder is generally selected from PVDF (polyvinylidene fluoride) or CMC (carboxymethyl cellulose), and the binder and the solvent are mixed in a ratio of 2:98 to 10:90;
9. introducing and stirring the coated lithium titanate raw material after the dispersion of the binder is completed, whereby the preparation is completed.

As a further improvement, the mobile communication terminal body of the present embodiment comprises a first mobile communication terminal body 100 and a second mobile communication terminal body 200, wherein the second mobile communication terminal body 200 is placed on a back side of the first mobile communication terminal body 100, the main processor 300 and the rechargeable battery 400 are disposed between the first mobile communication terminal body 100 and the second mobile communication terminal body 200, both the first mobile communication terminal body 100 and the second mobile communication terminal body 200 are connected to the main processor 300 and the rechargeable battery 400, and the main processor 300 is configured to control running of the first mobile communication terminal body 100 and the second mobile communication terminal body 200. In the present embodiment, each of the first mobile communication terminal body 100 and the second mobile communication terminal body 200 is a mobile phone body, an iPad body, or other smart terminal having the mobile communication function.

In the present embodiment, the main processor 300 may be a dual-core processor or a quad-core processor to improve the information processing efficiency of the mobile communication terminal. Of course, the main processor 300 may further comprise a first processor configured to control running of the first mobile communication terminal body 100, a second processor configured to control running of the second mobile communication terminal body 200, and a controller configured to control the first processer and the second processor to run synchronously or to run independently.

The first mobile communication terminal body 100 comprises a first touch screen 110, a first circuit board 120 and a first cover 130, the second mobile communication terminal body 200 is placed on a back side of the first mobile communication terminal body 100, the second mobile communication terminal body 200 comprises a second touch screen 210, a second circuit board 220 and a second cover 230, back surfaces of the first touch screen 110 and the second touch screen 210 are disposed opposite to each other, and both the first touch screen and the second touch screen are edgeless touch screens.

It should be appreciated that the back surface of the first mobile communication terminal body 100 herein specifically refers to the back surface of the first touch screen 110, i.e., a surface of the first cover 130 that is brought into contact with the rechargeable battery 400 and the main processor 300; and the back surface of the second mobile communication terminal body 200 specifically refers to the back surface of the second touch screen 210, i.e., a surface of the second cover 230 that is brought into contact with the rechargeable battery 400 and the main processor 300.

As shown in FIG. 1 and FIG. 2, the first touch screen 110, the first circuit board 120, the first cover 130 and the main processor 300, the second cover 210, the second circuit board 220, and the second touch screen 230 are disposed sequentially from top to bottom, wherein the first touch screen 110, the first circuit board 120, and the main processor 300 are sequentially connected, and the first touch screen 110 is configured to receive a first touch signal inputted by the user and transmit the first touch signal to the main processor 300 via the first circuit board 120; and the second touch screen 210, the second circuit board 220, and the main processor 300 are sequentially connected, and the second touch screen 210 is configured to receive a second touch signal and transmit the second touch signal to the main processor 300 via the second circuit board 220.

The main processor 300 is configured to control, based on the first touch signal, the first mobile communication terminal body 100 to implement a corresponding trigger operation, and to control, based on the second touch signal, the second mobile communication terminal body 200 to implement a corresponding trigger operation, that is to say, the main processor 300 controls the first mobile communication terminal body 100 and the second mobile communication terminal body 200 to run independently of each other. At this time, the first mobile communication terminal body 100, the main processor 300, and the rechargeable battery 400 are equivalent to one mobile communication terminal, and the second mobile communication terminal body 200, the main processor 300, and the rechargeable battery are equivalent to another mobile communication terminal, thus the number of mobile communication terminals carried by the user can be reduced, and its use is facilitated.

For example, the controller of the main processor 300 controls the first mobile communication terminal body 100 and the second mobile communication terminal body 200 to run independently based on a received independent running instruction, wherein the independent running instruction may be an independent running signal inputted by the user via a touch screen or a button. Thereafter, the first processor of the main processor 300 generates and outputs a first control signal based on a first touch signal, and a corresponding circuit module on the first circuit board 120 and the first touch screen 110 implement, based on the first control signal received by them, a trigger operation corresponding to the first touch signal, so as to implement the control of the first mobile communication terminal body 100. The second processor of the main processor 300 generates and outputs a second control signal based on a second touch signal, and a corresponding circuit module on the second circuit board 220 and the second touch screen 210 implement, based on the second control signal received by them, a trigger operation corresponding to the second touch signal, so as to implement the control of the second mobile communication terminal body 200.

Alternatively, based on the first touch signal or the second touch signal, the main processor 300 controls the first mobile communication terminal body 100 and the second mobile communication terminal body 200 to synchronously implement a corresponding trigger operation. For example, the controller of the main processor 300 controls the first mobile communication terminal body 100 and the second mobile communication terminal body 200 to run synchronously based on a received synchronous running instruction, wherein the synchronous running instruction may be a touch signal or a button signal inputted by the user. Thereafter, the controller of the main processor 300 controls the first processor and the second processor to run synchronously. At this time, the first processor and the second processor are combined integrally and considered as a unified whole. The main processor 300 generates a third control signal based on the first touch signal/second touch signal, wherein the third control signal is used for controlling the first mobile communication terminal body 100 and the second mobile communication terminal body 200 to synchronously implement a corresponding trigger operation.

In the above, the first circuit board 120 is configured to implement basic functions of the first mobile communication terminal body 100, the second circuit board 220 is configured to implement basic functions of the second mobile communication terminal body 200, and each of the first circuit board 120 and the second circuit board 220 comprises a storage module, a radio frequency circuit, a baseband chip and a baseband signal processing circuit, a SIM card interface circuit, an audio/video processing circuit, an image processing circuit, a detection circuit, a positioning circuit, a power source management circuit, and so on. The first cover 130 is configured to protect electronic components on the first circuit board 130 from being damaged, and to avoid exposure of the main processor 300 and the rechargeable battery 400 to the outside. The second cover 230 is configured to protect electronic components on the second circuit board 220 from being damaged, and to avoid exposure of the main processor 300 and the rechargeable battery 400 to the outside.

Still further, the first cover 130 is provided thereon with a first button 131, wherein the first button 131 is connected to the first circuit board 120, the first button 131 is connected to the main processor 300 via a first button circuit disposed on the first circuit board 120, with the first button circuit corresponding to the first button 131, and the main processor 300 is further configured to control, based on an action of the first button 131, the first mobile communication terminal body 100 to implement a corresponding trigger operation. For example, the first button 131 may include a power on/off button, a volume adjustment button, or the like.

The second cover 230 is provided thereon with a second button 231, wherein the second button 231 is connected to the second circuit board 220, the second button 231 is connected to the main processor 300 via a second button circuit disposed on the second circuit board 220, with the second button circuit corresponding to the second button 231, and the main processor 300 is further configured to control, based on an action of the second button 231, the second mobile communication terminal body 200 to implement a corresponding trigger operation. For example, the second button 231 may include a power on/off button, a volume adjustment button, and so on.

In this way, with the structure in which the first touch screen 110 corresponds to the first circuit board 120 and the second touch screen 210 corresponds to the second circuit board 220, each of the two mobile communication terminal bodies has its own hardware system, respectively, so that two operating systems can be simultaneously installed in the mobile communication terminal. The two operating systems in the two mobile communication terminal bodies may be the same or may be different. For example, an Android system may be installed in the first mobile communication terminal body 100, and a Symbian system or an iOS system or the like may be installed in the second mobile communication terminal body 200. Of course, the same mobile operating system may also be installed in the first mobile communication terminal body 100 and the second mobile communication terminal body 200. For example, the Android system is installed in both the first mobile communication terminal body 100 and the second mobile communication terminal body 200. With the structure in which two touch screens correspond to two operating systems, respectively, the mobile communication terminal is equivalent to two conventional mobile communication terminals, thereby reducing the number of mobile communication terminals carried by the user and facilitating its use.

As an implementation, the mobile communication terminal of the present disclosure further comprises a rotatable connection portion (not shown) connected between the first mobile communication terminal body 100 and the second mobile communication terminal body 200, wherein the rotatable connection portion is able to be flipped relative to the first mobile communication terminal body 100 or the second mobile communication terminal body 200. In the present embodiment, the rotatable connection portion may be a rotating shaft or a hinge, and connecting wires for the first mobile communication terminal body 100 and the second mobile communication terminal body 200 are all placed in the rotatable connection portion to implement power supply and data processing for each mobile communication terminal body.

The first mobile communication terminal body 100 is rotated relative to the second mobile communication terminal body 200 by an angle of greater than or equal to 180 degrees by the rotatable connection portion. When the first mobile communication terminal body 100 is rotated relative to the second mobile communication terminal body 200 by 180 degrees, the first touch screen and the second touch screen are placed on a same plane, the first touch screen and the second touch screen are combined integrally, and the main processor 300 controls the first mobile communication terminal body 100 and the second mobile communication terminal body 200 to run synchronously based on the first touch signal or the second touch signal. Since both the first touch screen and the second touch screen are edgeless touch screens, the first touch screen and the second touch screen after being rotated and combined can be implemented as a perfect combination of the screens and are equivalent to an entire touch screen, so that the visual area of the mobile communication terminal is doubled. At this time, the mobile communication terminal can be equivalent to a tablet computer as a whole.

Alternatively, the second mobile communication terminal body 200 is rotated relative to the first mobile communication terminal body 100 by an angle of greater than or equal to 180 degrees by the rotatable connection portion. When the second mobile communication terminal body 200 is rotated relative to the first mobile communication terminal body 100 by 180 degrees, the first touch screen and the second touch screen are placed on the same plane, the first touch screen and the second touch screen are combined integrally, and the main processor 300 controls the first mobile communication terminal body 100 and the second mobile communication terminal body 200 to run synchronously based on the first touch signal or the second touch signal. Since both the first touch screen and the second touch screen are edgeless touch screens, the first touch screen and the second touch screen after being rotated and combined can be implemented as a perfect combination of the screens and are equivalent to an integrated touch screen, so that the visual area of the mobile communication terminal is doubled.

Of course, in other embodiments, when the first mobile communication terminal body 100 is rotated relative to the second mobile communication terminal body 200 by an angle of 90 degrees to 180 degrees or the second mobile communication terminal body 200 is rotated relative to the first mobile communication terminal body 100 by an angle of 90 degrees to 180 degrees, the first touch screen and the second touch screen may also be combined integrally, and the main processor controls the first mobile communication terminal body 100 and the second mobile communication terminal body 200 to synchronously implement a corresponding trigger operation based on the first touch signal or the second touch signal. At this time, the first touch screen and the second touch screen form a bent, curved touch screen, so that the user can adjust the angle range according to actual needs, and its use is facilitated.

As an implementation, the network type of the first mobile communication terminal body 100 includes 2G, 3G, or 4G, and the network type of the second mobile communication terminal body 200 includes 2G, 3G, or 4G. The first mobile communication terminal body 100 is a mobile communication terminal body of dual-card dual-standby type, and the second mobile communication terminal body 200 is also a mobile communication terminal body of dual-card dual-standby. Then, 2 SIM cards, 3 SIM cards, or 4 SIM cards may be installed in the mobile communication terminal of the present disclosure, thus the number of mobile communication terminals carried by the user can be further reduced, and its use is facilitated. In other embodiments, each of the first mobile communication terminal body 100 and the second mobile communication terminal body 200 may also be a mobile communication terminal body of triple-card triple-standby or quad-card quad-standby type.

It should be noted that when an element is referred to as being "fixed" to another element, it may be directly on the another element or an intervening element may be present. When an element is considered to be "connected" to another element, it may be directly connected to the another element or an intervening element may also be present.

In the mobile communication terminal of the present disclosure, since the lithium-titanium composite graphene battery has the characteristics such as large battery capacity, large discharge rate, and fast charging, by using the lithium-titanium composite graphene battery as a rechargeable battery to supply power for the mobile communication terminal body, the charging time of the mobile communication terminal is shortened and the problem that the mobile communication terminal cannot be used for a long time under the high-temperature or severe cold condition is solved, so that the mobile communication terminal can be applied to special occasions such as armies, and the environmental adaptability, versatility and durability of the mobile communication terminal are improved. In addition, dual-screen display by the mobile communication terminal is achieved by the first mobile communication terminal body and the second mobile communication terminal body disposed opposite to each other, thus the number of mobile communication terminals carried by the user can be reduced, and its use is facilitated.

The embodiments described above are merely representative of several embodiments of the present disclosure, which are described specifically and in detail, but are not to be construed as limiting the scope of the present disclosure. It should be noted that a number of variations and modifications may be made by those of ordinary skill in the art without departing from the concept of the present disclosure and should fall within the scope of protection of the present disclosure. Therefore, the scope of protection of the present disclosure should be determined by the appended claims.

## Claims

1. A mobile communication terminal, **characterized by** comprising:
a mobile communication terminal body which comprises an edgeless touch screen;
a main processor, to which the mobile communication terminal body is connected, wherein the main processor is configured to control display and trigger operations of the mobile communication terminal body; and
a rechargeable battery for providing power source, to which both the mobile communication terminal body and the main processor are connected, wherein the rechargeable battery is a lithium-titanium composite graphene battery.

2. The mobile communication terminal according to claim 1, **characterized in that** the mobile communication terminal body comprises a first mobile communication terminal body and a second mobile communication terminal body, and the second mobile communication terminal body is placed on a back side of the first mobile communication terminal body; and
the main processor and the rechargeable battery are placed between the first mobile communication terminal body and the second mobile communication terminal body, and both the first mobile communication terminal body and the second mobile communication terminal body are connected to the main processor and the rechargeable battery.

3. The mobile communication terminal according to claim 2, **characterized in that** the first mobile communication terminal body comprises a first touch screen, a first circuit board, and a first cover; and the second mobile communication terminal body further comprises a second touch screen, a second circuit board, and a second cover;
the first touch screen, the first circuit board, and the main processor are sequentially connected, and the first touch screen is configured to receive a first touch signal and transmit the first touch signal to the main processor via the first circuit board;
the second touch screen, the second circuit board, and the main processor are sequentially connected, and the second touch screen is configured to receive a second touch signal and transmit the second touch signal to the main processor via the second circuit board; and
the main processor is configured to control based on a first touch signal the first mobile communication terminal body to implement a corresponding trigger operation, and to control based on a second touch signal the second mobile communication terminal body to implement a corresponding trigger operation; or the main processor is configured to control based on the first touch signal or the second touch signal the first mobile communication terminal body and the second mobile communication terminal body to synchronously implement a corresponding trigger operation.

4. The mobile communication terminal according to claim 3, **characterized in that** the first cover is provided thereon with a first button, and the first button is connected to the first circuit board; and
the second cover is provided thereon with a second button, and the second button is connected to the second circuit board.

5. The mobile communication terminal according to claim 3, **characterized by** further comprising a rotatable connection portion connected between the first mobile communication terminal body and the second mobile communication terminal body,
wherein the first mobile communication terminal body is rotated relative to the second mobile communication terminal body by an angle of greater than or equal to 180 degrees by the rotatable connection portion, or the second mobile communication terminal body is rotated relative to the first mobile communication terminal body by an angle of greater than or equal to 180 degrees by the rotatable connection portion.

6. The mobile communication terminal according to claim 5, **characterized in that** when the first mobile communication terminal body is rotated relative to the second mobile communication terminal body by an angle of 180 degrees or the second mobile communication terminal body is rotated relative to the first mobile communication terminal body by an angle of 180 degrees, the first touch screen and the second touch screen are placed on a same plane, the first touch screen and the second touch screen are combined integrally, and the main processor controls the first mobile communication terminal body and the second mobile communication terminal body to run synchronously based on the first touch signal or the second touch signal.

7. The mobile communication terminal according to claim 5, **characterized in that** the rotatable connection portion has a hinge structure or a rotating shaft structure, and connecting wires connecting the first mobile communication terminal and the second mobile communication terminal are disposed in the rotatable connection portion.

8. The mobile communication terminal according to any one of claims 1 to 7, **characterized in that** a network type of the first mobile communication terminal body includes 2G, 3G, or 4G, and a network type of the second mobile communication terminal body includes 2G, 3G, or 4G.

9. The mobile communication terminal according to any one of claims 1 to 7, **characterized in that** the first mobile communication terminal body is a mobile communication terminal body of dual-card dual-standby type, and the second mobile communication terminal body is also a mobile communication terminal body of dual-card dual-standby type.

10. The mobile communication terminal according to any one of claims 1 to 7, **characterized in that** each of the first mobile communication terminal body and the second mobile communication terminal body is a mobile phone body or an iPad body.
